(19) **Europäisches Patentamt**

**European Patent Office**

**Office européen des brevets**

(11) Veröffentlichungsnummer: **0 022 868**
**B1**

(12) # EUROPÄISCHE PATENTSCHRIFT

(45) Veröffentlichungstag der Patentschrift:
02.11.83

(51) Int. Cl.³: **G 02 C 7/02**

(21) Anmeldenummer: **79900712.5**

(22) Anmeldetag: **27.03.79**

(86) Internationale Anmeldenummer:
**PCT/EP 79/00023**

(87) Internationale Veröffentlichungsnummer:
**WO **/***** (00.00.00 Gazette 00/0)**

(54) **GLEITSICHT-ANISEIKONIE-GLAS.**

(30) Priorität: **05.04.78 DE 2814678**

(43) Veröffentlichungstag der Anmeldung:
**28.01.81 Patentblatt 81/4**

(45) Bekanntmachung des Hinweises auf die Patenterteilung:
**02.11.83 Patentblatt 83/44**

(84) Benannte Vertragsstaaten:
**FR**

(56) Entgegenhaltungen:
**US - A - 2 164 801**
**US - A - 2 696 757**
**US - A - 3 140 338**

(73) Patentinhaber: **Gernet, Hermann, Prof. Dr. med.,**
**Dunantstrasse 6, D-4400 Münster (DE)**

(72) Erfinder: **Gernet, Hermann, Prof. Dr. med.,**
**Dunantstrasse 6, D-4400 Münster (DE)**

Gleitsicht-Aniseikonie-Glas

Die Erfindung betrifft eine Sehhilfe gemäss dem Oberbegriff des Patentanspruches. Es handelt sich also um eine Sehhilfe, die von jüngeren Patienten mit einseitiger Aphakie oder Pseudophakie und noch ganz oder teilweise vorhandener Akkommodationsfähigkeit des gesunden Auges nach einer Bildangleichung für die Ferne durch bekannte optische Hilfsmittel getragen wird. Eine Sehhilfe dieser Art ist aus «Graefes Arch. klin. exp. Ophthal.» 204 (1977), S. 255–264, bekannt.

Erfolgreich am grauen Star operierte Patienten, die am gesunden Auge wegen ganz oder teilweise intakter Akkommodation noch keinen Nahzusatz oder nur einen schwachen Nahzusatz benötigen, haben auch nach Bildgrössenangleichung für die Ferne durch bekannte Sehhilfen im Nahbereich erhebliche Sehbeschwerden wegen der nur am operierten brillenkorrigierten Auge auftretenden Bildgrössenzunahme für die Nähe. Dabei wird das Bild des brillenkorrigierten operierten Auges zu gross im Vergleich zum gesunden Auge.

Der Erfindung liegt deshalb die Aufgabe zugrunde, eine Sehhilfe der im Oberbegriff des Patentanspruchs genannten Art für jüngere Patienten mit einseitiger Aphakie oder Pseudophakie anzugeben, die auch für das Sehen im Nahbereich zu einer für beide Augen gleichen Netzhautbildgrösse führt.

Diese Aufgabe wird erfindungsgemäss durch eine Sehhilfe gelöst, die vor dem gesunden Auge ein Brillenglas aufweist, das in all seinen Bereichen eine im wesentlichen konstante Brechkraft hat, das aber eine von den oberen Bereichen zu den unteren Bereichen stufenlos ansteigende Bildvergrösserung bewirkt.

Die Erfindung reduziert also nach einer Bildangleichung für die Ferne durch bekannte Massnahmen den für die Nähe erneut auftretenden Bildgrössenunterschied durch ein Brillenglas, das entweder keine oder eine übliche optische Wirkung und zusätzlich eine spezielle stufenlose (gleitende) Bildvergrösserung ohne wesentliche Brechkraftzunahme für die Nähe bewirkt. Es handelt sich also um ein Aniseikonie-Gleitsichtglas ohne oder mit optischer Wirkung üblicher Art für den Blick in die Ferne und Nähe ohne eine zusätzliche Nahkorrektion. Dieses Brillenglas wird vor dem gesunden Auge getragen. Es bewirkt eine bei Blicksenkung stufenlos ansteigende Bildvergrösserung um 2 bis 6%. Die stufenlose Bildvergrösserung für die Nähe wird durch eine den optischen Bedürfnissen angepasste Formgebung des Glases im Nahteil bewirkt, wobei Mittendicke, Vorder- und Hinterkrümmung des Glases im Nahteil so aufeinander abgestimmt sind, dass die gewünschte gleitende Bildvergrösserung um 2 bis 6% entsteht. Gläser mit schwächerer gleitender Nahvergrösserung als 2% erfüllen den angestrebten Zweck weniger gut.

Brillengläser mit alleiniger oder zusätzlicher bildvergrössernder Wirkung, sogenannte Aniseikoniegläser, sind speziell bei einseitiger Linsenlosigkeit oder Pseudophakie (künstliche Augenlinse nach Staroperation) an sich bekannt, jedoch nur für Fernkorrektion oder für Nahkorrektion allein oder als Bifokalglas.

Mit der beschriebenen Sehhilfe wird für jüngere Patienten mit einseitiger Aphakie und Pseudophakie eine Bildangleichung für die Nähe und damit wieder ein bequemes beidäugiges Sehen erreicht. Ein weiterer Vorteil ist die Abschwächung der notwendigen Dioptrienzahl bekannter optischer Massnahmen zur Bildangleichung für Ferne und Nähe am kranken Auge und damit ein in kosmetischer Hinsicht und auch gewichtsmässig günstigerer Effekt der verordneten optischen Hilfsmittel.

**Patentanspruch**

Sehhilfe bei einseitiger Aphakie oder Pseudophakie, bei der die Bildgrösse im kranken Auge durch einen Fernteil so korrigiert ist, dass sie für Fernsicht gleich der Bildgrösse des gesunden Auges ist, mit einem Nahteil mit vom Fernteil abweichender Bildvergrösserung vor dem kranken Auge, dadurch gekennzeichnet, dass sie vor dem gesunden Auge ein Brillenglas aufweist, das in all seinen Bereichen eine im wesentlichen konstante Brechkraft hat, das aber eine von den oberen Bereichen zu den untern Bereichen stufenlos ansteigende Bildvergrösserung bewirkt.

**Claim**

Visual aid in unilatered aphakia or unilateral pseudophakia, wherein the retinal image size in the sick eye is corrected by means of a distant vision part of visual aid in such a manner that for distant vision it is of equal size as the retinal image of the healthy eye, the aid having a near vision part before the sick eye causing an image magnification which differs from that of the distant vision part, characterised in that the aid comprises a spectacle glass before the healthy eye which in all its regions has a substantially constant refractive power, which, however, causes a stepless increasing image magnification from upper regions towards the lower regions of the visual aid.

**Revendication**

Aide visuelle dans le cas d'aphakie ou de pseudophakie unilatérales, avec une partie – placée devant l'œil malade – faite pour la vision de distance et qui rend la grandeur de l'image rétinienne de l'œil malade égale à celle de l'œil sain, et avec une partie faite pour la vision de près ayant une magnification différente de la partie faite pour la vision de distance. La particularité de l'aide visuelle consiste dans un verre qui est placé devant l'œil sain et dont le pouvoir refringent est à peu près constant, mais qui assure une magnification progressive, à mesure qu'on passe des parties supérieures aux parties inférieures de l'aide visuelle.